# DEMANDE DE BREVET EUROPEEN

(11) **EP 4 246 539 A1**
(43) Date de publication de la demande: **20.09.2023**
(21) Numéro de dépôt: 23161811.7
(22) Date de dépôt: 14.03.2023
(51) Int. Cl.: H01F 1/057, H01F 41/02

(54) **PROCÉDÉ DE FABRICATION D'UN AIMANT À PARTIR D'AIMANTS RECYCLÉS**

(30) Priorité: 16.03.2022 FR 2202305
(71) Demandeur: COMMISSARIAT À L'ÉNERGIE ATOMIQUE ET AUX ÉNERGIES ALTERNATIVES, 75015 Paris (FR)
(72) Inventeur: RADO, Cyril, 38054 Grenoble cedex 09 (FR); LUCA, Sorana, 38054 Grenoble cedex 09 (FR)
(74) Mandataire: Germain Maureau

(57) **Abrégé**

L'invention concerne un procédé de fabrication d'un aimant à partir d'aimants recyclés comprenant les étapes suivantes :
a) on dispose :
- d'une 1^{ère} poudre comprenant des grains d'une phase magnétique TR₂Fe₁₄B, des composés à base de métaux et une phase de joints de grains riche en terre rare, ladite 1^{ère} poudre étant exempte de terre rare lourde,
- d'une 2^{ème} poudre obtenue à partir d'aimants recyclés comprenant des terres rares lourdes,

b) on soumet la 2^{ème} poudre à un traitement d'hydrogénation-disproportionation,
c) on mélange la 1^{ère} poudre avec la 2^{ème} poudre obtenue à l'issue de l'étape b),
d) on soumet le mélange obtenu à l'issue de l'étape c) à une étape de compactage de manière à obtenir une pièce compactée,
e) on soumet la pièce compactée obtenue à l'issue de l'étape d) à une étape de frittage de manière à obtenir un aimant.

## Description

La présente invention concerne un procédé de fabrication d'un aimant à partir d'aimants recyclés. Plus précisément, l'invention concerne les aimants permanents de type TRFeB.

Dans le cadre de la présente invention, «TR » désigne un élément ou une combinaison de deux éléments ou plus choisis parmi les terres rares (notamment les terres rares : La, Ce, Pr, Nd, Dy, Gd, Tb, Ho).

TR est majoritairement le néodyme (Nd). C'est pourquoi, l'exemple le plus courant de ces aimants permanents est l'aimant de type NdFeB dans lequel la phase cristalline Nd₂Fe₁₄B est la phase principale, à savoir un alliage de néodyme, de fer et de bore permettant de former un système cristallin quadratique.

Du fait de leurs excellentes propriétés magnétiques qui sont une bonne coercivité (à savoir une résistance à la désaimantation) et une rémanence élevée (autrement dit une force magnétique élevée), les aimants permanents de type NdFeB sont couramment utilisés dans diverses applications parmi lesquelles on peut notamment citer les aimants des moteurs de véhicules électriques ou hybrides, d'appareils électriques (par exemple des appareils d'électroménagers ou de climatisation), d'appareils électroniques (par exemple les disques durs) et des génératrices d'éoliennes.

Cependant, compte tenu des problématiques actuelles de protection de l'environnement et d'épuisement des ressources naturelles, notamment des terres rares, afin de satisfaire une demande perpétuellement en croissance et tout du moins pouvant dépasser les projections d'offre en ces aimants permanents pour ces différentes technologies de pointe, il est nécessaire de pouvoir recycler efficacement les aimants contenus dans ces différents appareils, dispositifs ou moteurs, dès lors que ces dispositifs sont hors d'usage, afin de limiter la production de ces aimants à partir uniquement de matières vierges extraites de gisements.

Dans le cadre de la présente invention, on entend par « aimants recyclés » :
- des aimants qui ont été, en vue d'une nouvelle utilisation, récupérés (par exemple au cours d'opération de tri des déchets) dans des appareils, dispositifs, moteurs ou autres produits comprenant des aimants et qui n'étaient plus utilisés, et également
- des aimants correspondant à des rebuts de production, par exemple des rebuts de la production d'aimants (car notamment défectueux) et qui sont ainsi revalorisés.

Il existe différentes voies de recyclages des aimants permanents de type NdFeB.

Une 1^{ère} de ces voies est le recyclage dit « direct » au cours de laquelle les aimants récupérés (par exemple d'appareils hors d'usage) sont réutilisés à l'état de blocs, après éventuellement un ou plusieurs traitements de surface et d'usinage. En d'autres termes, selon cette voie, les aimants sont produits directement à partir d'aimants recyclés. Il n'y a aucun traitement obligatoire conduisant à une modification des propriétés physico-chimiques des aimants recyclés, mais simplement un traitement léger externe ou de découpe pour la mise en forme souhaitée. Il est cependant possible de réaliser un traitement de diffusion de terres rares sur ces aimants à partir de leur surface ce qui modifie leurs propriétés physico-chimiques et donc leurs propriétés magnétiques, principalement la coercivité.

Une 2^{ème} voie de recyclage est une voie dite « indirecte » ou « longue » au cours de laquelle les éléments chimiques constitutifs des aimants récupérés (par exemple d'appareils hors d'usage) sont séparés sous la forme d'oxydes, grâce à des traitements de pyrométallurgie ou d'hydrométallurgie. Ces oxydes ainsi obtenus sont réintroduits en amont de la fabrication de nouveaux aimants en tant que matières premières dans la synthèse des métaux, puis des alliages précurseurs.

Une 3^{ème} voie de recyclage connue est la voie dite « poudre » au cours de laquelle les aimants récupérés (par exemple d'appareils hors d'usage) sont réduits sous la forme de poudres. Ces poudres sont ensuite diluées dans des polymères pour fabriquer des aimants liés ou bien elles sont densifiées par des traitements thermiques pour obtenir des aimants frittés.

La voie dite « poudre » présente l'avantage de pouvoir réajuster les compositions des nouveaux aimants fabriqués à partir des aimants recyclés par des mélanges de différentes poudres et ainsi de disposer d'une certaine liberté quant à la forme finale de ces nouveaux aimants. En outre, dans le cas des aimants frittés, cette voie de recyclage repose sur des procédés de production d'aimants par métallurgie des poudres qui sont déjà mis en oeuvre et parfaitement maîtrisés.

Cependant, cette voie de recyclage dite « poudre » (tout comme d'ailleurs la voie dite « directe ») ne permet pas une utilisation optimale des terres rares lourdes (Dy ou Tb) qui sont présentes dans la phase magnétique de certains aimants permanents en substitution essentiellement au néodyme (ainsi que dans une moindre mesure au praséodyme), et ce afin d'améliorer leur coercivité et leur tenue à la température. Par exemple, la teneur en Dy peut aller jusqu'à 10% en masse en moyenne pour des températures de fonctionnement de 150 à 180°C. En effet, les terres rares lourdes permettent d'augmenter l'anisotropie magnétocristalline de la phase magnétique et donc la résistance à la désaimantation.

A cet égard, il convient de rappeler qu'on distingue deux catégories de terre rare :
- les terres rares lourdes comprenant : europium (Eu), gadolimium (Gd), terbium (Tb), dysprosium (Dy), holmium (Ho), erbium (Er), thulium (Tm), ytterbium (Yb), lutécium (Lu) et yttrium (Y),
- les terres rares légères comprenant : lanthane (La), cérium (Ce), praséodyme (Pr), néodyme (Nd) et samarium (Sm).

Il est connu des procédés de fabrication des aimants permanents comprenant des terres rares lourdes que la substitution du néodyme (ainsi que dans une moindre mesure du praséodyme) par les terres rares lourdes dans l'ensemble de la phase magnétique TR₂Fe₁₄B s'accompagne d'une diminution de la rémanence qui peut être limitée en utilisant un mélange d'une poudre pauvre en terres rares lourdes et d'une poudre riche en terres rares lourdes ou bien en diffusant les terres rares lourdes à partir de la surface des aimants frittés et le long des joints de grains. De cette manière, les terres rares lourdes sont localisées préférentiellement à la périphérie des grains magnétiques, c'est-à-dire dans les régions les plus critiques pour la désaimantation, de manière à obtenir une structure connue sous la dénomination « coeur-coquille ». La région périphérique d'un grain magnétique est donc la région dans laquelle les terres rares lourdes ont diffusé lors de la fabrication de l'aimant.

En d'autres termes, les connaissances sur les procédés de fabrication des aimants comprenant des terres rares lourdes soulignent l'importance de localiser les terres rares lourdes dans une région périphérique des grains magnétiques, afin d'améliorer les gains en performances magnétiques des aimants ainsi obtenus tout en présentant également l'avantage de limiter la quantité de terres rares lourdes nécessaires à leur fabrication.

Or, au cours de la voie de recyclage dite « poudre », il est possible de co-fritter plusieurs poudres dont au moins l'une d'entre elles peut avoir été obtenue à partir d'aimants recyclés qui contenaient des terres rares lourdes. Mais dans ce cas, une part importante de ces terres rares lourdes ne va pas pouvoir diffuser en dehors des grains et va donc demeurer dans la phase magnétique de ladite poudre plutôt que de venir alimenter un effet de type coeur-coquille à la périphérie des grains initialement dépourvus de terres rares lourdes. C'est pourquoi, afin d'obtenir des performances magnétiques comparables à celles obtenues avec des procédés de fabrication des aimants permanents comprenant des terres rares lourdes à partir de matières premières vierges, au cours de cette voie de recyclage dite « poudre », il est connu de rajouter des terres rares lourdes issues des sources primaires (autrement dit des gisements de terres rares lourdes). Ou bien, si l'on souhaite recycler des aimants riches en terres rares lourdes (typiquement une teneur supérieure à 2,5% en masse), il est aussi connu de mélanger une 1^{ère} poudre issue de ces aimants recyclés riches en terres rares lourdes avec une 2^{ème} poudre exempte de terres rares lourdes ou tout du moins avec une faible teneur en terres rares lourdes (typiquement une teneur inférieure à 1% en masse). Le co-frittage de ces 2 poudres ne permet de faire diffuser qu'une faible partie des terres rares lourdes contenues dans la 1^{ère} poudre. Avec un tel mélange de poudres, l'augmentation de la coercivité est de l'ordre de 150 kA/m par pourcentage de terre rare lourde ajouté.

Les inventeurs de la présente invention ont cherché à optimiser l'utilisation des terres rares lourdes présentes dans les aimants permanents recyclés au cours de la voie de recyclage dite « poudre ».

Les inventeurs ont ainsi cherché à améliorer la voie de recyclage dite « poudre » en proposant un nouveau procédé de fabrication d'un aimant à partir d'aimants permanents recyclés de type TRFeB et contenant des terres rares lourdes qui repose sur cette voie de recyclage mais qui présente également d'autres caractéristiques techniques originales qui sont détaillées ci-dessous permettant :
- l'obtention d'aimants avec des performances magnétiques élevées (à savoir une bonne coercivité tout en maintenant une rémanence élevée), et ce sans aucun ajout de terres rares lourdes issues de matières premières vierges (par exemple issues de gisements) ; ce qui minimise les impacts environnementaux et est plus économe en énergie ;
- une valorisation optimale des aimants permanents comprenant des teneurs élevées en terres rares lourdes (par exemple entre 2,5 à 10% en masse) provenant d'appareils ou dispositifs hors d'usage (autrement dit des aimants à recycler) ;
- l'utilisation des lignes de production actuelles pour la fabrication des aimants.

Le procédé de fabrication d'un aimant à partir d'aimants recyclés repose sur la voie de recyclage dite « poudre » et permet l'obtention d'un aimant dans lequel les terres rares lourdes sont localisées à la périphérie des grains de la phase magnétique, afin d'obtenir une bonne coercivité tout en maintenant une rémanence élevée, et même en optimisant ses performances magnétiques par rapport à celles des aimants recyclés contenant lesdites terres rares lourdes.

L'invention a pour objet un procédé de fabrication d'un aimant à partir d'aimants recyclés qui comprend au moins les étapes suivantes :
a) on dispose :
   - d'une 1^{ère} poudre comprenant des grains d'une phase magnétique TR₂Fe₁₄B, des composés à base de métaux et une phase de joints de grains riche en terre rare, et optionnellement des grains d'une phase non-magnétique TRFe₄B₄, ladite 1^{ère} poudre étant exempte de terre rare lourde ou la teneur massique en terre rare lourde exprimée par rapport à la masse de la 1^{ère} poudre n'excédant pas 3%, de préférence 1%,
   - d'une 2^{ème} poudre obtenue à partir d'aimants recyclés comprenant des terres rares lourdes, la teneur massique en terres rares lourdes, exprimée par rapport à la masse de ladite 2^{ème} poudre étant comprise entre 3% et 10%, de préférence entre 5% et 10%, ladite 2^{ème} poudre contenant des grains d'une phase magnétique TR₂Fe₁₄B,
b) on soumet la 2^{ème} poudre à un traitement d'hydrogénation-disproportionation (aussi connu sous la dénomination anglophone « hydrogénation disproportionation ») de manière à décomposer la phase magnétique TR₂Fe₁₄B en un mélange contenant des hydrures de terres rares de formule chimique TRHₓ dans laquelle x est le ratio atomique de H/TR et est par exemple compris entre 2 et 3, du fer et du borure de fer (Fe₂B),
c) on mélange la 1^{ère} poudre avec la 2^{ème} poudre obtenue à l'issue de l'étape b) dans un rapport massique qui dépend de la teneur en terres rares lourdes de la 2^{ème} poudre de manière à obtenir un mélange,
d) on soumet le mélange obtenu à l'issue de l'étape c) à une étape de compactage de manière à obtenir une pièce compactée,
e) on soumet la pièce compactée obtenue à l'issue de l'étape d) à une étape de frittage de manière à obtenir un aimant.

Du fait que la 2^{ème} poudre contient des terres rares lourdes, au cours de l'étape b) du procédé de fabrication selon l'invention, il se forme des hydrures de terres rares lourdes. Le rapport massique de l'étape c) peut être déterminé comme suit : par exemple si la 2^{ème} poudre contient X% de terres rares lourdes et que l'on souhaite atteindre dans l'aimant final une teneur globale de Y%, le rapport massique de la masse m2 de la 2^{ème} poudre sur la masse m1 de la 1^{ère} poudre est m2/m1 = Y/(X-Y).

Au cours de l'étape e) de frittage du mélange des 1^{ère} et 2^{ème} poudres, il se forme une phase liquide (par réaction eutectique) entre les différents composés à base de métaux, la phase riche en TR, la phase magnétique TR₂Fe₁₄B et la phase non-magnétique optionnelle TRFe₄B₄ de la 1^{ère} poudre. Cette phase liquide a une teneur massique élevée en terres rares, de l'ordre de 90% en masse à 700°C, 80% à 900°C et 70% à 1000°C. Lors de la montée en température sous vide, les hydrures de terre rare formés à l'étape b), notamment les hydrures de terres rares lourdes sont transformés en des terres rares lourdes métalliques qui se dissolvent dans ladite phase liquide de manière à l'enrichir. Ces terres rares lourdes désormais sous la forme de terres rares lourdes métalliques sont alors disponibles pour créer une structure dite « coeur-coquille » tel que mentionnée ci-dessus autour des grains de la 1^{ère} poudre au cours de la densification des 1^{ère} et 2^{ème} poudres qui se produit au cours du frittage.

Ainsi, grâce à l'étape b) du procédé de fabrication selon l'invention, les terres rares lourdes présentes dans les aimants recyclés sont extraites de la phase magnétique en étant transformées en hydrures. Cela permet d'augmenter l'activité chimique des terres rares lourdes. En effet, lors de la montée en température sous vide au cours du frittage, la transformation de ces hydrures en des terres rares lourdes métalliques les rend disponibles dans la phase liquide qui se forme également au cours du frittage.

L'étape b) du procédé de fabrication selon l'invention permet ainsi de s'affranchir d'une étape de diffusion de ces terres rares lourdes au sein des grains de la phase magnétique TR₂Fe₁₄B de la 2^{ème} poudre ; ce qui est un processus lent et qui créerait un gradient de concentration au sein des grains riches en terres rares lourdes de la 2^{ème} poudre. Cela permettrait de ne valoriser *in fine* qu'une faible fraction de la quantité desdites terres rares lourdes. De plus, dans ce cas de diffusion, la teneur en terres rares lourdes en périphérie des grains de la 1^{ère} poudre serait plus faible que la teneur en terres rares lourdes dans les grains de la 2^{ème} poudre.

A contrario, avec le procédé de fabrication selon l'invention, l'extraction des terres rares lourdes de la phase magnétique des aimants recyclés de la 2^{ème} poudre augmente leur potentiel chimique. A l'issue de l'étape e), les terres rares lourdes sont localisées en périphérie des grains de la phase magnétique TR₂Fe₁₄B de la 1^{ère} poudre à des teneurs plus élevées que la teneur en terres rares lourdes dans les grains de la 2^{ème} poudre obtenue à partir d'aimants recyclés, de sorte que la coercivité de l'aimant ainsi obtenu est augmentée de manière très significative, et ce alors que ledit aimant contient de faibles quantités de terres rares lourdes.

En outre, le procédé de fabrication selon l'invention présente l'avantage de co-fritter la 1^{ère} et la 2^{ème} poudres à plus basse température, car les terres rares lourdes ont déjà été extraites des grains de la phase magnétique TR₂Fe₁₄B de la 2^{ème} poudre. Il permet ainsi de localiser les terres rares lourdes en extrême périphérie des grains de la 1^{ère} poudre et donc d'obtenir une structure « coeur-coquille » très marquée qui permet de se rapprocher des gains en coercivité de ceux obtenus par diffusion aux joints de grains dans des aimants de 2 mm d'épaisseur, à savoir une augmentation de l'ordre de 200 à 300 kA/m pour un ajout de terre rare lourde d'environ 0,1 % en masse, dans une poudre qui n'en contient pas.

Ainsi, dans le cas d'un mélange de poudres dit « classique » (à savoir sans aimants recyclés), et avec un gain de l'ordre de 150 kA/m pour 1% en masse de terre rare lourde, pour augmenter la coercivité de 300 kA/m il faut globalement apporter, par la poudre riche en terres rares lourdes, 2% en masse de terres rares lourdes. Dans le cas du procédé de fabrication selon l'invention, l'augmentation de la coercivité peut être de l'ordre de 200 kA/m pour 0,1 % de terres rares lourdes ajoutées et donc dans ce cas il ne faudrait apporter globalement que 0,15% en masse de terres rares lourdes par la poudre riche en terres rares lourdes. Il est alors possible d'atteindre une même augmentation de la coercivité avec une forte dilution de la poudre comprenant des aimants recyclés, typiquement dans un rapport 1 :10.

Ce gain en termes de dilution du procédé de fabrication selon l'invention est particulièrement intéressant, car il permet d'envisager le recyclage, en voie courte, de quantités d'aimants recyclés riches en terres rares lourdes, qui resteront limitées et de permettre de fabriquer d'importantes quantités d'aimants magnétiquement performants avec un minimum d'apport de matières premières critiques.

Les différentes caractéristiques techniques du procédé de fabrication selon l'invention sont décrites ci-dessous plus en détail.

Dans le cadre de la présente invention, on entend par « phase de joints de grains riche en TR », une phase métallique contenant plus de 70% en masse de terre rare combinée à des métaux, par exemple des métaux choisis parmi le fer, le cuivre et l'aluminium.

Les composés à base de métaux de la 1^{ère} poudre peuvent comprendre des métaux choisis parmi le fer, le cuivre, l'aluminium, le gallium, le titane et le zirconium.

La 1^{ère} poudre peut comprendre en pourcentages massiques exprimés par rapport à la masse de ladite 1^{ère} poudre :
- entre 90% et 99%, de préférence entre 95% et 97%, de grains de la phase magnétique de type TR₂Fe₁₄B,
- entre 0,5% et 3%, de préférence entre 0,5% et 2%, des composés à base de métaux,
- entre 1% et 10%, de préférence entre 2% et 5%, de la phase de joints de grains riche en terre rare,
- optionnellement entre 0,1% et 5%, de préférence entre 0,1% et 1%, de grains de la phase non-magnétique de type TRFe₄B₄.

La 1^{ère} poudre peut comprendre, en pourcentages massiques exprimés par rapport à la masse de ladite 1^{ère} poudre :
- entre 27% et 35% de terre rare,
- entre 0,9% et 1,2% de bore,
- complément à 100% d'au moins un élément métallique M choisi dans le groupe constitué par Fe, Co, Ni, pris seul ou en mélange de ceux-ci, la somme des pourcentages massiques de Ni et Co étant inférieure ou égale à 5%, et optionnellement Fe étant remplacé partiellement par au moins un élément de remplacement choisi dans le groupe constitué par AI, Cu, Ga, Nb, Zr, Ti, Mo, V, Hf, Ta, W, Sn, pris seul ou en mélange de ceux-ci, la teneur en le ou les éléments de remplacement étant inférieure ou égale à 3%.

La 1^{ère} poudre présente de préférence une granulométrie comprise entre 3 µm et 7 µm.

La 1^{ère} poudre peut avoir été obtenue à partir :
- de matières premières vierges (par exemple des métaux purs et/ou des alliages), ou
- d'aimants recyclés qui sont totalement exempts de terres rares lourdes ou dont la teneur massique n'excède pas 3%, de préférence 1%, ou encore
- d'un mélange de matières premières vierges et d'aimants recyclés qui sont totalement exempts de terres rares lourdes ou dont la teneur massique n'excède pas 3%, de préférence 1%.

Lorsque la 1^{ère} poudre a été obtenue totalement ou en partie à partir de matières premières vierges, ces dernières sont choisies parmi les métaux purs et/ou les alliages. De préférence, il s'agit de métaux purs.

Lorsque la 1^{ère} poudre a été obtenue totalement ou en partie à partir de matières vierges, ces dernières peuvent avoir été soumises aux étapes suivantes :
- une étape de coulée sur roue, suivie
- d'une étape de décrépitation sous hydrogène et/ou de broyage à jet d'air (connu aussi sous la dénomination anglophone : broyage de type Jet Mill).

Tout d'abord, le mélange de matières premières vierges (autrement dit la « charge de base ») est chauffée, de préférence sous pression partielle de gaz neutre ou bien sous vide, à une température avantageusement comprise entre 1350°C et 1550°C, de manière à obtenir un bain de matière en fusion.

Le bain de matière en fusion est ensuite coulé sur une roue en rotation refroidie. La matière en fusion est ainsi solidifiée par trempe. La vitesse de refroidissement peut être comprise entre 100 K/s et 1000 K/s. Les rubans fondus obtenus peuvent avoir une épaisseur comprise entre 0,1 et 0,5 mm, de préférence entre 0,15 et 0,35 mm.

L'étape de décrépitation sous hydrogène permet d'obtenir une 1^{ère} poudre dont la granulométrie est comprise entre 50 µm et quelques millimètres.

La décrépitation sous hydrogène peut être réalisée à une température comprise entre 10°C et 500°C, de préférence entre 20°C et 150°C, et à une pression d'hydrogène comprise entre 0 MPa et 5 MPa, de préférence entre 0,08 MPa et 0,25 MPa.

La durée de l'étape de décrépitation sous hydrogène peut être comprise entre 1 heure et 5 heures.

L'étape de broyage à jet d'air permet d'obtenir une 1^{ère} poudre dont la taille médiane est comprise entre 2 µm et 10 µm, de préférence entre 3 µm et 6 µm, avec une finesse granulométrique dont le rapport du 9^{ème} décile au 1^{er} décile, ou autrement dit « D90/D10 », est inférieure à 10, de préférence inférieur à 5. Des équipements commerciaux tels que des broyeurs commercialisés par la société Hosokawa-Alpine sous les dénominations commerciales AFG100, AFG200 et AFG400 peuvent être utilisés pour cette étape de broyage à jet d'air. Ils comportent une chambre étanche dans laquelle un gaz inerte sous une pression comprise entre 2 et 8 bars, est introduit par trois buses convergentes, et la poudre à broyer par une trémie permettant de contrôler le débit d'alimentation. Le flux de gaz emporte la poudre dans son sillage et la relâche en passant dans un tourbillon engendré par un système nommé « cyclone ». De manière à améliorer la finesse granulométrique, ces équipements peuvent être munis d'un sélecteur inertiel qui empêche les plus grosses particules de sortir de la chambre de broyage.

Lorsque la 1^{ère} poudre a été obtenue totalement ou en partie à partir d'aimants recyclés, ces derniers peuvent avoir été soumis à une étape de décrépitation sous hydrogène et/ou de broyage à jet d'air.

Les caractéristiques techniques de l'étape de décrépitation sous hydrogène et de broyage à jet d'air peuvent être celles qui ont été décrites pour l'obtention de la 1^{ère} poudre à partir de matières premières vierges.

La 2^{ème} poudre présente de préférence une granulométrie comparable à celle de la première poudre de manière à faciliter le mélange de la 1^{ère} poudre avec la 2^{ème} poudre à l'étape c) du procédé de fabrication selon l'invention. La 2^{ème} poudre présente de préférence une granulométrie entre 3 µm et 7 µm.

La 2^{ème} poudre peut comprendre, en pourcentages massiques exprimés par rapport à la masse de ladite 2^{ème} poudre :
- entre 27% et 35% de terre rare, dont entre 3% et 10%, de préférence entre 5% et 10%, de terre rare lourde,
- entre 0,9% et 1,2% de bore,
- complément à 100% d'au moins une élément métallique M choisi dans le groupe constitué par Fe, Co, Ni, pris seul ou en mélange de ceux-ci, la somme des pourcentages massiques de Ni et Co étant inférieure ou égale à 5% et, optionnellement Fe étant remplacé partiellement par au moins un élément de remplacement choisi dans le groupe constitué par AI, Cu, Ga, Nb, Zr, Ti, Mo, V, Hf, Ta, W, Sn, pris seul ou en mélange de ceux-ci, la teneur en le ou les éléments de remplacement étant inférieure ou égale à 3%.

De manière avantageuse, la 2^{ème} poudre a été obtenue à partir d'aimants recyclés qui ont été soumis au traitement suivant :
- une étape de décrépitation sous hydrogène, optionnellement suivie
- d'un broyage à jet d'air.

L'étape de décrépitation sous hydrogène permet d'obtenir une 2^{ème} poudre grossière dont la granulométrie est comprise entre 50 µm et quelques millimètres.

Les caractéristiques techniques de l'étape de décrépitation sous hydrogène et de broyage à jet d'air pour l'obtention de la 2^{ème} poudre peuvent être celles qui ont été décrites pour l'obtention de la 1^{ère} poudre à partir de matières premières vierges ou d'aimants recyclés.

Le traitement d'hydrogénation-disproportionation peut être réalisé sous vide, à savoir en chauffant sous vide la 2^{ème} poudre à une température élevée avant l'introduction d'hydrogène. Dans un autre mode de réalisation de l'invention, la 2^{ème} poudre est chauffée à une température élevée après l'introduction d'hydrogène.

Par « température élevée », on entend une température comprise entre 800°C et 1200°C, à savoir la température à laquelle est soumise la 2^{ème} poudre au cours du traitement d'hydrogénation-disproportionation.

La 2^{ème} poudre peut être chauffée jusqu'à l'obtention de la température élevée avec une vitesse de chauffage comprise entre 1°C/minute et 30°C/minute.

La pression d'hydrogène au cours du traitement d'hydrogénation-disproportionation peut être comprise entre 0,01 bar et 50 bar, préférentiellement entre 0,8 bar et 5 bar.

La durée du traitement d'hydrogénation-disproportionation peut être comprise entre 2 heures et 10 heures.

A l'issue du traitement d'hydrogénation-disproportionation, la 2^{ème} poudre peut être soumise à un refroidissement sous hydrogène, afin d'empêcher la recombinaison des éléments pour reformer la phase magnétique TR₂Fe₁₄B, et donc conserver le mélange d'hydrures de terres rares de formule chimique TRHₓ, du fer et du borure de fer (Fe₂B), jusqu'à la température ambiante (à savoir environ 20°C).

Optionnellement, avant la réalisation de l'étape c) du procédé de fabrication selon l'invention, la 2^{ème} poudre est fracturée afin d'améliorer le contact entre les hydrures des terres rares et la phase liquide au cours de l'étape e) de manière à ce que les terres rares lourdes métalliques se dissolvent au mieux dans la phase liquide. Cette étape peut être nécessaire si les grains de la 2^{ème} poudre se sont réagglomérés au cours du traitement d'hydrogénation-disproportionation, mais également si leur microstructure n'est pas la plus adaptée, à savoir notamment si les hydrures sont localisés au sein des grains plutôt qu'en périphérie. La 2^{ème} poudre peut avoir été fracturée par au moins une technique de broyage choisie parmi le broyage à jet d'air, le broyage planétaire et le broyage par attrition.

L'étape c) de mélange de la 1^{ère} poudre et de la 2^{ème} poudre obtenue à l'issue de l'étape b) est avantageusement effectuée pendant au moins 30 minutes, de préférence plus d'une heure, de manière à obtenir un mélange homogène.

Le mélange obtenu à l'issue de l'étape c) peut être versé dans un moule (présentant la forme en négatif de l'aimant à fabriquer) pour réaliser l'étape d) de compactage.

L'étape de compactage peut être réalisée en utilisant une compaction transverse, axiale, isostatique à froid ou un pressage isostatique avec caoutchouc (aussi connu sous la dénomination « RIP », à savoir l'acronyme anglophone pour « Rubber Isostatic Pressing »), de manière à obtenir une pièce compactée dite « pièce à vert ». Par exemple, le mélange est compacté en appliquant une pression uni-axiale comprise entre 50 MPa et 300 MPa.

La densité de la pièce compactée obtenue à l'issue de l'étape d) est avantageusement comprise entre 50% et 70% de la densité théorique dudit mélange obtenu à l'issue de l'étape c).

Dans un mode de réalisation avantageux de l'invention, à l'issue de l'étape c) et avant la réalisation de l'étape d) de compactage, le mélange obtenu à l'issue de l'étape c) est soumis à un champ magnétique pour orienter les grains du mélange et obtenir *in-fine* un aimant anisotrope qui présente une rémanence élevée. De préférence, le champ magnétique est supérieur à 1 Tesla, plus préférentiellement supérieur à 2 Tesla. Cette application du champ magnétique peut être réalisée lorsque le mélange obtenu à l'issue de l'étape c) a été versé dans le moule.

Dans un mode de réalisation avantageux de l'invention, à l'issue de l'étape d) et avant la réalisation de l'étape e) de frittage, la pièce compactée obtenue à l'issue de l'étape d) est déshydrurée. Cette opération consiste à éliminer la quasi-totalité de l'hydrogène contenu dans la pièce compactée. L'hydrogène est essentiellement présent sous la forme d'hydrures NdHx avec x proche de 2. Il s'agit de ramener la teneur globale en hydrogène dans la pièce compactée, qui est par exemple de l'ordre de 2000 ppm (0,2 % en masse) à une valeur par exemple inférieure à 100 ppm (0,01 % en masse), préférentiellement inférieure à 50 ppm (0,005 % en masse). Cette opération permet d'obtenir de meilleures propriétés magnétiques après le frittage.

Cette étape optionnelle de déshydruration de la pièce compactée peut être réalisée, en soumettant ladite pièce compactée à une température comprise entre 600°C et 800°C, de préférence sous vide secondaire de manière à éviter la démixtion de la phase TRFeB, et ce en présence d'hydrogène. Un vide secondaire correspond à une pression inférieure à 10⁻⁴ mbar, de préférence inférieure à 5.10⁻⁵ mbar.

Ensuite, l'étape e) de frittage est réalisée de manière à obtenir un aimant. Il s'agit de la consolidation par traitement thermique de la pièce compactée, avec éventuellement une fusion, partielle ou totale, de certains de ses constituants (mais pas de tous ses constituants, de sorte que la pièce compactée n'est pas transformée en une masse liquide).

L'étape e) de frittage est avantageusement réalisée dans un environnement ne contenant sensiblement pas d'oxygène, d'eau ou d'hydrogène, de préférence sous vide secondaire et à une température comprise entre à 850°C et 1050°C et pendant une durée comprise entre 3 heures et 24 heures de manière à obtenir ledit aimant.

A l'issue de l'étape e) du procédé de fabrication selon l'invention, on obtient un aimant dont la densité est avantageusement supérieure à 98% de la densité théorique du matériau qui le constitue.

Dans un mode de réalisation avantageux de l'invention, à l'issue de l'étape e), l'aimant ainsi obtenu est soumis à un refroidissement. De préférence, il s'agit d'un refroidissement rapide, à savoir supérieur à 20°C/min, plus préférentiellement d'environ 30°C/min, de la température de frittage jusqu'à la température ambiante ou, le cas échéant jusqu'à la température du début de l'étape optionnelle de recuisson décrite ci-dessous.

L'aimant obtenu à l'issue de l'étape e), le cas échéant à l'issue du refroidissement si celui-ci est mis en oeuvre, peut être ensuite soumis à une étape de recuisson.

En effet, la recuisson permet d'augmenter la résistance à la désaimantation de l'aimant. L'homme du métier maîtrise les conditions de réalisation de l'étape de recuisson.

Par exemple, si l'aimant a été soumis à un refroidissement rapide jusqu'à une température de 50°C, l'étape de recuisson peut comprendre le profil thermique suivant :
- un chauffage de 50°C à 820°C à 5°C/min ;
- un palier à 820 °C pendant 2 heures ;
- un refroidissement de 820°C à 50°C à 20°C/min ;
- un chauffage de 50°C à une température comprise entre 460°C et 650°C à 5°C/min ;
- un palier à une température comprise entre 460°C et 650°C pendant 2 heures ;
- un refroidissement de la température comprise entre 460°C et 650°C à 50°C à 30°C/min.

Dans un mode de réalisation avantageux de l'invention, à l'issue de l'étape e) de frittage, le cas échéant à l'issue du refroidissement si celui-ci est mis en oeuvre ou de l'étape de recuisson si celle-ci est mise en oeuvre, l'aimant peut être usiné et/ou subir un traitement de surface, par exemple un polissage ou l'application d'un revêtement pour prévenir de l'oxydation et de la corrosion.

A l'issue du procédé de fabrication décrit précédemment, un aimant ne possède pas d'aimantation propre. L'aimant peut ainsi être soumis à une aimantation complémentaire : par exemple, l'aimant peut être soumis à un champ d'aimantation parallèle à la direction d'alignement du champ magnétique utilisé pour orienter les grains du mélange et obtenir un aimant anisotrope comme décrit plus haut. Le champ magnétique peut présenter une intensité supérieure à 4 Tesla, de préférence supérieure à 5 Tesla. Ces valeurs élevées sont généralement obtenues en mode pulsé.

En d'autres termes, à l'issue de l'étape e) de frittage, l'aimant ainsi obtenu peut être soumis à au moins l'une des étapes suivantes (à savoir l'une de ces étapes ou toute combinaison de celles-ci) choisies parmi :
- un refroidissement, par exemple une étape de refroidissement telle que décrite ci-dessus ;
- une étape de recuisson, par exemple une étape de recuisson telle que décrite ci-dessus ;
- une étape d'usinage et/ou de traitement de surface, par exemple une étape d'usinage et/ou de traitement de surface telle que décrite ci-dessus ;
- une étape d'aimantation complémentaire, par exemple une étape d'aimantation complémentaire telle que décrite ci-dessus.

Ces étapes optionnelles réalisées après l'étape e) de frittage sont parfaitement à la portée de l'homme du métier.

La présente invention sera mieux comprise à l'aide de la description détaillée de la partie expérimentale ci-dessous qui décrit, à titre d'exemple non limitatif, une forme de réalisation du procédé de fabrication d'un aimant selon l'invention.

### PARTIE EXPERIMENTALE :

### Préparation de la 1^{ère} poudre

Une 1^{ère} poudre comprenant en pourcentages massiques exprimés par rapport à la masse de ladite 1^{ère} poudre :
- 34,4% d'un mélange des deux terres rares Nd et Pr (selon les pourcentages massiques suivants : 75% de Nd et 25% de Pr, ces pourcentages massiques étant exprimés par rapport à la masse totale desdites deux terres rares) ;
- B : 0,96% ; Co : 0,5% ; Al : 0,3% ; Cu : 0,18% ; Ga : 0,15% ; Ti : 0,08 %.
- Fe : complément à 100%,
a été préparée de la manière suivante.

On disposait initialement de matières premières vierges sous forme massive des différents métaux tels que détaillés ci-dessus et dans les quantités indiquées également ci-dessus (autrement dit la « charge de base »).

Cette charge de base a été chauffée. La fusion a été effectuée sous pression partielle d'argon (400 mbar) dans un creuset en alumine à une température maximale de 1450°C de manière à obtenir un bain de fusion.

Le bain de matière en fusion a été coulé sur une roue à base de cuivre refroidie à l'eau et ayant une vitesse de rotation permettant l'obtention de rubans cristallisés d'une épaisseur comprise entre 0,15 mm et 0,40 mm.

Les rubans ainsi obtenus ont été recueillis dans un bac refroidi par circulation d'eau de manière à les refroidir jusqu'à température ambiante.

Les rubans ont ensuite été placés dans une enceinte étanche d'un four pour une étape de décrépitation.

L'étape de décrépitation a été réalisée de la manière suivante. L'enceinte a été mise sous vide primaire (à savoir une pression inférieure à 1 mbar, de préférence inférieure à 10⁻² mbar), puis remplie d'hydrogène pour atteindre une pression de 2 bars. Ensuite, l'enceinte a été mise sous vide primaire pour évacuer l'hydrogène, puis elle a été chauffée à une température de 550°C pendant 2 heures pour obtenir une déshydruration partielle, puis refroidie jusqu'à la température ambiante (à savoir environ 20°C) sous argon.

La poudre grossière ainsi obtenue a ensuite été homogénéisée dans un mélangeur dans lequel 0,05% en masse de stéarate de zinc avait été introduit, le pourcentage massique de stéarate de zinc étant exprimé par rapport à la masse de ladite poudre grossière. Le stéarate de zinc est un lubrifiant qui permet de faciliter l'établissement d'un lit fluidisé lors de l'étape de broyage à jet de gaz (jet mill). Cette homogénéisation a duré 1 heure et demie.

La poudre homogénéisée ainsi obtenue a ensuite été introduite dans un broyeur à jet de gaz en lit fluidisé. Le gaz utilisé était de l'azote. La pression de broyage, le diamètre des buses et la vitesse de sélecteur ont été ajustés pour obtenir une 1^{ère} poudre dont la taille médiane de particule mesurée en ligne par un granulomètre laser était de 5 µm.

### Préparation de la 2^{ème} poudre

Une 2^{ème} poudre comprenant en pourcentages massiques exprimés par rapport à la masse de ladite 2^{ème} poudre :
- 28,9% d'un mélange des deux terres rares Nd et Pr (selon les pourcentages massiques suivants : 75% de Nd et 25% de Pr, ces pourcentages massiques étant exprimés par rapport à la masse totale desdites deux terres rares) ;
- Dy : 3,2% ;
- B : 0,96% ; Co : 1,0% ; Al : 0,9% ; Cu : 0,15% ; Ga : 0,02% ; Ti : 0,07 % ; Nb : 0,1%.
- Fe : complément à 100%,
a été préparée de la manière suivante.

On disposait initialement d'aimants recyclés de dimensions 8 x 28 x 5 mm qui comprenaient les différents métaux tels que détaillés ci-dessus et dans les quantités indiquées également ci-dessus.

Les aimants recyclés ont été placés dans une enceinte étanche d'un four pour l'étape de décrépitation. L'enceinte a été mise sous vide primaire, puis remplie d'hydrogène pour atteindre une pression de 2,5 bars. Ce traitement a permis d'hydrurer la totalité du matériau mais également de peler les revêtements métalliques. L'enceinte a été mise sous vide primaire pour évacuer l'hydrogène, puis elle a été chauffée à une température de 550°C pendant 2 heures pour une déshydruration partielle, puis refroidie jusqu'à la température ambiante sous argon.

La poudre grossière ainsi obtenue a été tamisée à 1000 µm pour éliminer les pelures de revêtements métalliques. La poudre tamisée ainsi obtenue a ensuite été homogénéisée dans un mélangeur dans lequel 0,05% en masse de stéarate de zinc avait été introduit, le pourcentage massique de stéarate de zinc étant exprimé par rapport à la masse de ladite poudre grossière. Cette homogénéisation a duré 1 heure et demie.

La poudre homogénéisée ainsi obtenue a ensuite été introduite dans un broyeur à jet de gaz en lit fluidisé. Le gaz utilisé était l'azote. La pression de broyage, le diamètre des buses et la vitesse de sélecteur ont été ajustés pour obtenir une 2^{ème} poudre dont la taille médiane de particule mesurée en ligne par un granulomètre laser était de 5 µm.

On disposait ainsi d'une 1^{ère} poudre et d'une 2^{ème} poudre conformément à l'étape a) du procédé de fabrication selon l'invention.

Au cours de l'étape b) de traitement d'hydrogénation-disproportionation du procédé de fabrication selon l'invention, la 2^{ème} poudre a été soumise à un environnement d'hydrogène pur à une pression absolue de 0,8 bar dans une enceinte étanche d'un four à température ambiante.

Puis, le four a été chauffé à une température de 850°C, pendant une durée de 3 heures, pour permettre la réaction complète de ladite 2^{ème} poudre avec l'hydrogène et la transformer en un mélange constitué essentiellement des phases Fe, Fe₂B, FeB, TRHx. Ces phases se sont formées à l'intérieur des grains de ladite 2^{ème} poudre. L'objectif était d'obtenir une microstructure assez grossière avec les sous-grains des phases d'hydrures TRHx qui débouchaient en périphérie des grains.

Ensuite, selon l'étape c) du procédé de fabrication, la 1^{ère} poudre a été mélangée avec la 2^{ème} poudre obtenue à l'issue de l'étape b) dans un rapport massique qui dépend de la teneur en TR lourdes de la 2^{ème} poudre pendant 30 minutes dans un mélangeur, dans une enceinte sous atmosphère contrôlée.

Le rapport massique de la masse m2 de la 2ème poudre sur la masse m1 de la 1ère poudre était égal à m2/m1 = 10/90.

Le mélange obtenu à l'issue de l'étape c) a ensuite été introduit dans différents moules cylindriques de 22 mm de hauteur et 14 mm en diamètre intérieur en caoutchouc qui ont été soumis à un champ magnétique de 7 Tesla pour orienter les particules.

Ensuite, l'étape d) de compactage du procédé de fabrication selon l'invention a été réalisée en soumettant le mélange contenu dans ces différents moules à une compaction isostatique à froid à 1500 bar de manière à obtenir des pièces compactées.

Puis, l'étape e) de frittage du procédé de fabrication selon l'invention a été réalisée sur ces pièces compactées sous vide secondaire selon le profil thermique suivant :
- chauffage à 5°C/min de la température ambiante jusqu'à 300°C, puis palier pendant 2 heures à 300°C,
- chauffage à 5°C/min de 300°C jusqu'à 500°C, puis palier pendant 2 heures à 500°C,
- chauffage à 5°C/min de 500°C jusqu'à 750°C, puis palier pendant 2 heures à 750°C,
- chauffage à 1°C/min de 750°C jusqu'à 975°C, puis palier pendant 12 heures à 975 °C.

A la fin du dernier palier (de frittage), de l'argon a été introduit jusqu'à atteindre une pression absolue de 2 bar de manière à obtenir des aimants.

Ensuite, les aimants ont été soumis à un refroidissement avec une vitesse de refroidissement de 15°C/min de 975°C jusqu'à 30°C.

Puis, les aimants ont ensuite été soumis à une étape de recuisson sous vide secondaire selon le profil thermique suivant :
- chauffage à 5°C/min de 50°C jusqu'à 820°C,
- palier à 820°C pendant 2 heures,
- refroidissement à 20°C/min de 820°C jusqu'à 50°C,
- chauffage à 5°C/min de 50°C jusqu'à 500°C,
- palier à la température de 500°C pendant 2 heures,
- refroidissement à 15°C/min de 500°C jusqu'à la température ambiante.

Les aimants ainsi obtenus de forme cylindrique ont été usinés au moyen d'une rectifieuse et d'une meule diamant pour éliminer la couche d'oxyde et obtenir des surfaces parallèles.

Les performances magnétiques des aimants ainsi obtenus étaient les suivantes: coercitivité HcJ = 1533 kA/m, rémanence Br = 1.2 T et produit énergétique maximum (BH)max = 34.7 MGOe.

## Revendications

1. Procédé de fabrication d'un aimant à partir d'aimants recyclés, **caractérisé en ce qu'**il comprend au moins les étapes suivantes :
a) on dispose :
- d'une 1^{ère} poudre comprenant des grains d'une phase magnétique TR₂Fe₁₄B (« TR » désignant un élément ou une combinaison de deux éléments ou plus choisis parmi les terres rares), des composés à base de métaux et une phase de joints de grains riche en terre rare, et optionnellement des grains d'une phase non-magnétique TRFe₄B₄, ladite 1^{ère} poudre étant exempte de terre rare lourde ou la teneur massique en terre rare lourde exprimée par rapport à la masse de la 1^{ère} poudre n'excédant pas 3%, de préférence 1%,
- d'une 2^{ème} poudre obtenue à partir d'aimants recyclés comprenant des terres rares lourdes, la teneur massique en terres rares lourdes, exprimée par rapport à la masse de ladite 2^{ème} poudre étant comprise entre 3% et 10%, de préférence entre 5% et 10%, ladite 2^{ème} poudre contenant des grains d'une phase magnétique TR₂Fe₁₄B,
b) on soumet la 2^{ème} poudre à un traitement d'hydrogénation-disproportionation de manière à décomposer la phase magnétique TR₂Fe₁₄B en un mélange contenant des hydrures de terres rares de formule chimique TRHₓ dans laquelle x est le ratio atomique de H/TR, du fer et du borure de fer (Fe₂B),
c) on mélange la 1^{ère} poudre avec la 2^{ème} poudre obtenue à l'issue de l'étape b) dans un rapport massique qui dépend de la teneur en terres rares lourdes de la 2^{ème} poudre de manière à obtenir un mélange,
d) on soumet le mélange obtenu à l'issue de l'étape c) à une étape de compactage de manière à obtenir une pièce compactée,
e) on soumet la pièce compactée obtenue à l'issue de l'étape d) à une étape de frittage de manière à obtenir un aimant.

2. Procédé de fabrication selon la revendication 1, **caractérisé en ce que** la 1^{ère} poudre comprend, en pourcentages massiques exprimés par rapport à la masse de ladite 1^{ère} poudre :
- entre 90% et 99%, de préférence entre 95% et 97%, de grains de la phase magnétique de type TR₂Fe₁₄B,
- entre 0,5% et 3%, de préférence entre 0,5% et 2%, des composés à base de métaux,
- entre 1% et 10%, de préférence entre 2% et 5%, de la phase de joints de grains riche en terre rare,
- optionnellement entre 0,1% et 5%, de préférence entre 0,1% et 1%, de grains de la phase non-magnétique de type TRFe₄B₄.

3. Procédé de fabrication selon la revendication 1 ou 2, **caractérisé en ce que** la 1^{ère} poudre comprend, en pourcentages massiques exprimés par rapport à la masse de ladite 1^{ère} poudre :
- entre 27% et 35% de terre rare,
- entre 0,9% et 1,2% de bore,
- complément à 100% d'au moins un élément métallique M choisi dans le groupe constitué par Fe, Co, Ni, pris seul ou en mélange de ceux-ci, la somme des pourcentages massiques de Ni et Co étant inférieure ou égale à 5%, et optionnellement Fe étant remplacé partiellement par au moins un élément de remplacement choisi dans le groupe constitué par AI, Cu, Ga, Nb, Zr, Ti, Mo, V, Hf, Ta, W, Sn, pris seul ou en mélange de ceux-ci, la teneur en le ou les éléments de remplacement étant inférieure ou égale à 3%.

4. Procédé de fabrication selon l'une quelconque des revendications 1 à 3, **caractérisé en ce que** la 2^{ème} poudre comprend, en pourcentages massiques exprimés par rapport à la masse de ladite 2^{ème} poudre :
- entre 27% et 35% de terre rare, dont entre 3% et 10%, de préférence entre 5% et 10%, de terre rare lourde,
- entre 0,9% et 1,2% de bore,
- complément à 100% d'au moins une élément métallique M choisi dans le groupe constitué par Fe, Co, Ni, pris seul ou en mélange de ceux-ci, la somme des pourcentages massiques de Ni et Co étant inférieure ou égale à 5% et, optionnellement Fe étant remplacé partiellement par au moins un élément de remplacement choisi dans le groupe constitué par AI, Cu, Ga, Nb, Zr, Ti, Mo, V, Hf, Ta, W, Sn, pris seul ou en mélange de ceux-ci, la teneur en le ou les éléments de remplacement étant inférieure ou égale à 3%.

5. Procédé de fabrication selon l'une quelconque des revendications 1 à 4, **caractérisé en ce que** la 1^{ère} poudre a été obtenue à partir :
- de matières premières vierges, ou
- d'aimants recyclés qui sont totalement exempts de terres rares lourdes ou dont la teneur massique n'excède pas 3%, de préférence 1%, ou
- d'un mélange de matières premières vierges et d'aimants recyclés qui sont totalement exempts de terres rares lourdes ou dont la teneur massique n'excède pas 3%, de préférence 1%.

6. Procédé de fabrication selon la revendication 5, **caractérisé en ce que** les matières premières vierges ont été soumises aux étapes suivantes :
- une étape de coulée sur roue, suivie
- d'une étape de décrépitation sous hydrogène et/ou de broyage à jet d'air.

7. Procédé de fabrication selon la revendication 5, **caractérisé en ce que** les aimants recyclés ont été soumis à une étape de décrépitation sous hydrogène et/ou de broyage à jet d'air.

8. Procédé de fabrication selon l'une quelconque des revendications 1 à 7, **caractérisé en ce que** la 2^{ème} poudre a été obtenue à partir d'aimants recyclés qui ont été soumis au traitement suivant :
- une étape de décrépitation sous hydrogène, optionnellement suivie
- d'un broyage à jet d'air.

9. Procédé de fabrication selon l'une quelconque des revendications 1 à 8, **caractérisé en ce que** la 2^{ème} poudre a été fracturée par au moins une technique de broyage choisie parmi le broyage à jet d'air, le broyage planétaire et le broyage par attrition.

10. Procédé de fabrication selon l'une quelconque des revendications 1 à 9, **caractérisé en ce qu'**à l'issue de l'étape c) et avant la réalisation de l'étape d) de compactage, le mélange obtenu à l'issue de l'étape c) est soumis à un champ magnétique, de préférence un champ magnétique supérieur à 1 Tesla.

11. Procédé de fabrication selon l'une quelconque des revendications 1 à 10, **caractérisé en ce qu'**à l'issue de l'étape d) et avant la réalisation de l'étape e) de frittage, la pièce compactée obtenue à l'issue de l'étape d) est déshydrurée.

12. Procédé de fabrication selon l'une quelconque des revendications 1 à 11, caractérisé ce que l'aimant obtenu à l'issue de l'étape e) de frittage est soumis à au moins l'une des étapes choisies parmi un refroidissement, une étape de recuisson, une étape d'usinage et/ou de traitement de surface et une étape d'aimantation complémentaire.
